# DEMANDE DE BREVET EUROPEEN

(11) **EP 3 418 021 A1**
(43) Date de publication de la demande: **26.12.2018**
(21) Numéro de dépôt: 18178505.6
(22) Date de dépôt: 19.06.2018
(51) Int. Cl.: B29C 33/04, B29C 45/73, B29C 45/16, B29D 11/00

(54) **PROCEDE DE MOULAGE D'UNE PIECE OPTIQUE AVEC REFROIDISSEMENT DIRECT DE LA PIECE PAR UN FLUIDE**

(30) Priorité: 23.06.2017 FR 1755746
(71) Demandeur: Valeo Vision, 93012 Bobigny Cedex (FR)
(72) Inventeur: REVOL, Damien, 93012 Bobigny Cedex (FR)
(74) Mandataire: Valeo Vision

(57) **Abrégé**

La présente invention se rapporte à un procédé de moulage d'une pièce optique au moyen d'un moule, au moins une station de moulage, et au moins une station de refroidissement comprenant un espace de refroidissement (70), le procédé comprenant :
- une étape de moulage d'une pièce moulée en station de moulage,
- une étape de transfert de cette pièce depuis cette station de moulage jusque dans l'espace de refroidissement, en conservant la pièce moulée en vis-à-vis d'au moins l'une des parties de moule,
- une étape de refroidissement de la pièce moulée (61, 63, 64) par l'envoi d'un fluide de refroidissement entre la pièce moulée et les parois de l'espace de refroidissement, la pièce moulée étant maintenue à distance de ces parois.

L'invention se rapporte également à un moule adapté à la mise en oeuvre de ce procédé.

## Description

La présente invention se rapporte au domaine des procédés et dispositifs ou installations de moulage de pièces optiques, notamment des pièces optiques de véhicule, telles que celles employées dans les dispositifs d'éclairage et/ou de signalisation pour véhicule automobile. Plus particulièrement, la présente invention a trait à un procédé de moulage d'une pièce optique qui est un élément transparent destiné à faire converger ou diverger la lumière, tel qu'une lentille optique, ou encore à propager la lumière par réflexion interne, tel qu'un guide de lumière.

Un point délicat dans la production de ces pièces optiques, est celui du refroidissement de la première couche injectée, en particulier lorsqu'elle est épaisse, que ce soit la première et unique couche ou la première couche d'une pièce formée par surmoulage successif de plusieurs couches. En effet lors du refroidissement du matériau, des rétractations de ce matériau peuvent se produire en surface. Or dans une pièce optique certaines surfaces sont utilisées pour dévier les rayons dans une direction déterminée. Par conséquent, ces rétractations peuvent entrainer que la pièce optique ne produise pas les déviations souhaitées des rayons lumineux.

Cela peut être particulièrement dommageable dans le cas d'une pièce optique de mise en forme utilisée dans un dispositif lumineux de véhicule, tel qu'un projecteur avant ou un feu arrière, notamment dans le cas des optiques de mises en forme traversée par la lumière, telles que des lentilles.

Selon la demande une pièce optique de mise en forme dévie les rayons lumineux émis par la source de lumière du dispositif lumineux de manière à conférer au faisceau du dispositif lumineux des caractéristiques photométriques données. La pièce optique de mise en forme peut être choisie parmi un réflecteur, une lentille, ou un guide de lumière notamment avec une terminaison épaisse.

Les rétractations sont encore plus dommageables dans le cas des lentilles et des guides de lumière. En effet, leurs surfaces forment des dioptres traversés par la lumière pour conférer aux rayons les directions permettant d'obtenir une photométrie donnée.

Par ailleurs, plus la première couche est épaisse et/ou plus le nombre de couches surmoulées est grand et plus les rétractations entraineront une dégradation importante de la pièce.

Le document WO2015017929 divulgue un procédé de moulage d'une lentille dans lequel une étape de moulage est dans un premier temps réalisée dans une cavité formée par la réunion d'une première et d'une deuxième empreintes de respectivement une première et une deuxième parties de moule. Une fois la première couche moulée, le moule est ouvert, la deuxième empreinte est enlevée, la pièce moulée restant dans la première empreinte. Une étape de refroidissement est ensuite mise en oeuvre, en refermant une troisième empreinte sur la première empreinte de manière à former une cavité logeant la pièce moulée. Cette dernière est en contact avec le métal formant la paroi de la cavité, ce qui permet une évacuation des calories. Deux autres étapes de refroidissement, avec changement d'une des empreintes formant la cavité de refroidissement sont ensuite réalisées. Ensuite, deux autres étapes de moulage sont successivement réalisées. A chacune de ces étapes l'une des empreintes est enlevée, l'autre conservée avec la pièce dedans.

Néanmoins ce procédé est perfectible en termes de refroidissement.

Le problème technique que vise à résoudre l'invention est donc d'améliorer le refroidissement des pièces optiques moulées au cours d'un procédé de moulage.

A cet effet, un premier objet de l'invention est un procédé de moulage d'une pièce optique au moyen d'un dispositif de moulage comprenant un moule comprenant:
- deux parties de moule se refermant l'une sur l'autre pour fermer le moule et s'écartant l'une en vis-à-vis de l'autre pour l'ouvrir,
- au moins une station de moulage comprenant une cavité de moulage dont les parois sont formées par une portion de chacune des deux parties de moule,
- au moins une station de refroidissement comprenant un espace de refroidissement formé entre une portion de refroidissement de l'une des parties de moule et une portion de refroidissement de l'autre des parties de moule,
ledit procédé comprenant un premier groupe d'étapes comprenant:
- une étape de moulage d'une pièce moulée dans la cavité de moulage,
- une étape de transfert, au cours de laquelle la pièce moulée est transférée depuis cette cavité de moulage jusqu'à l'intérieur de l'espace de refroidissement, tout en conservant la pièce moulée en vis-à-vis d'au moins l'une des parties de moule au cours de cette étape de transfert,
- une étape de refroidissement, au cours de laquelle la pièce moulée est maintenue à distance des portions de refroidissement, l'étape de refroidissement comprenant l'envoi d'un fluide de refroidissement entre la pièce moulée et les portions de refroidissement.

Ainsi, le fluide de refroidissement permet un meilleur contrôle du refroidissement de la pièce moulée, en augmentant la vitesse de refroidissement. En effet, le matériau injecté se fige plus rapidement, et on observe moins de rétraction du matériau.

Ce fluide peut être un gaz, par exemple de l'air, l'air étant une solution simple et économique.

Selon l'invention, en mettant la pièce moulée à distance des portions de refroidissement, donc des parois de ces portions, et en injectant le fluide de refroidissement entre la pièce moulée et ces portions de refroidissement, on injecte donc l'air des deux côtés de la pièce moulée. Cela permet de la refroidir encore plus rapidement.

Ces deux côtés de la pièce moulée sont ceux en vis-à-vis des parois des portions de refroidissement, donc en vis-à-vis pour l'un des côtés d'une des parties de moule, et pour l'autre des côtés de l'autre des parties de moule. Ces côtés seront plus particulièrement adaptés à comprendre une zone destinée à recevoir des rayons lumineux dans l'utilisation à laquelle est destinée la pièce optique, par exemple la déviation de rayons lumineux pour former un faisceau d'éclairage de la route, un faisceau de signalisation ou un faisceau d'éclairage de l'intérieur de l'habitacle d'un véhicule.

Par ailleurs, en restant en vis-à-vis d'une partie du moule lors du transfert, on n'écarte pas la pièce hors de la zone de moulage. On gagne ainsi du temps entre l'étape de moulage et l'étape de refroidissement.

Comme pour tout moulage, le moulage de l'étape de moulage est réalisé le moule étant fermé et en injectant un matériau. Ce matériau peut par exemple être un polycarbonate (PC) ou un polyméthacrylate de méthyle (PMMA).

Le procédé selon l'invention peut optionnellement présenter une ou plusieurs des caractéristiques suivantes :
- le moule comprend plusieurs stations de moulage et plusieurs stations de refroidissement, le procédé étant mis en oeuvre de manière à réaliser la pièce optique en plusieurs couches successives d'un ou plusieurs matériaux, chacune des couches étant obtenue dans une station de moulage distincte, la première couche étant formée par le premier groupe d'étapes, une ou plusieurs couches supplémentaires, voire chacune des couches supplémentaires, étant chacune obtenue par un groupe supplémentaire d'étapes distinct comprenant :
   o une étape de transfert, au cours de laquelle la pièce moulée est transférée depuis la station de refroidissement où elle a été refroidie jusqu'à l'intérieur de la cavité de moulage de la station de moulage suivante, tout en conservant la pièce moulée en vis-à-vis d'au moins l'une des parties de moule lors de ce transfert,
   o une étape de moulage de la couche suivante sur la pièce moulée,
   o une étape de transfert, au cours de laquelle la pièce moulée est transférée depuis la station de moulage jusqu'à l'intérieur de l'espace de refroidissement de la station de refroidissement suivante, tout en conservant la pièce moulée en vis-à-vis d'au moins l'une des parties de moule lors de ce transfert,
   o une étape de refroidissement, au cours de laquelle la pièce moulée est maintenue à distance des portions de refroidissement, l'étape de refroidissement comprenant l'envoi d'un fluide de refroidissement entre la pièce moulée et les portions de refroidissement ;
   ainsi on optimise la réalisation de la pièce optique avec des surfaces précises, non seulement en réalisant la pièce optique en plusieurs couches mais encore en réalisant un refroidissement selon l'invention également après l'obtention de certaines de ces couches, voire de chacune de ces couches ;
- la ou les étapes de transfert sont réalisées moule ouvert et la ou les étapes de refroidissement sont réalisées moule fermé, la pièce moulée étant transférée depuis la station de moulage jusqu'à l'intérieur d'un logement de refroidissement dont les parois sont formées par les portions de refroidissement et délimitent l'espace de refroidissement, le fluide de refroidissement étant envoyé à l'intérieur du logement de refroidissement ; en confinant ainsi la pièce optique dans un logement on favorise le refroidissement par convection au moyen du fluide de refroidissement ;
- les stations sont réparties autour d'un axe de rotation, les étapes de transfert d'une station à une station suivante se faisant selon un mouvement de rotation autour de cet axe de rotation ; c'est une réalisation permettant un transfert rapide d'une station à l'autre ;
- une première des partie de moule est une partie de moule fixe en rotation et une deuxième des partie de moule comprend une base fixe en rotation et une structure rotative apte à s'écarter de la base, la ou les portions formant la ou les cavités de moulage et la ou les portions de refroidissement portées par cette deuxième partie de moule étant fixées sur la base, la ou chaque étape de transfert d'une station donnée à une station suivante comprenant:
   o une sous-étape d'ouverture du moule, en maintenant la pièce moulée sur la structure rotative,
   o une sous-étape d'écartement de la structure rotative du support et de la ou des portions de cavité de moulage et des portions de refroidissement portées par cette deuxième partie de moule,
   o une sous-étape de rotation de la structure rotative autour de l'axe de rotation, de manière à ce que la pièce moulée vienne entre les portions de la cavité de moulage ou les portions de refroidissement de la station suivante;
   cela permet des mouvements simples en déplaçant les pièces moulées et en conservant les portions de cavité de moulage et les portions de refroidissement en place ;
- selon l'alinéa précédent, la ou chaque étape de transfert d'une station donnée à une station suivante comprend en outre après la sous-étape de rotation :
   o une sous-étape de rapprochement de la structure de rotation du support fixe en rotation et de la ou des portions de cavité de moulage et de la ou des portions de refroidissement portées par cette deuxième platine, de manière à ce que la pièce moulée soit en face de la portion de cavité de moulage ou la portion de refroidissement correspondante,
   o une sous-étape de fermeture du moule ;
   on confine ainsi davantage la pièce moulée pour réaliser le refroidissement ;
- le procédé comprend une étape d'enlèvement de la pièce moulée du moule après la réalisation de la seule ou de la dernière étape de refroidissement du procédé, cet enlèvement étant réalisée au niveau d'une station de refroidissement où a eu lieu cette seule ou cette dernière étape de refroidissement ;
   le cycle de formation de la pièce moulée est ainsi réalisé complètement au niveau du moule ;
- l'unique ou la première couche de la pièce moulée est réalisée de manière à former la pièce moulée avec une portion optique et au moins une excroissance de maintien, notamment moins épaisse que cette portion optique, et :
   o le maintien à distance de la pièce moulée au cours de la ou des étapes de refroidissement est réalisé par maintien de la ou d'au moins une excroissance de maintien ; et/ou
   o le maintien de la pièce moulée au cours de la ou des étapes de transfert est réalisé par maintien de la ou d'au moins une excroissance de maintien ;
- la pièce moulée comprend des excroissances de maintien réparties autour de la portion optique ; on renforce ainsi le maintien ; cette portion optique peut être une portion centrale de la pièce moulée ;
- le procédé comprend après l'étape d'enlèvement une étape de section partielle ou totale des excroissances de maintien ;
- le procédé comprend une action de refroidir les zones de l'une ou de chaque partie de moule comprenant les portions de cavités de moulage et/ou les portions de refroidissement par des conduits de refroidissement secondaire de fluide de refroidissement distincts de conduits de refroidissement primaire de fluide de refroidissement utilisés pour l'envoi du fluide de refroidissement entre la pièce moulée et les portions de refroidissement ; ainsi on contrôle plus facilement la température de moulage et/ou on améliore le refroidissement de la pièce moulée ; le fluide de refroidissement utilisé dans ces conduits de refroidissement secondaire peut être notamment un liquide, notamment de l'eau, ou un gaz, pour améliorer le refroidissement des zones dans lesquelles sont formées les cavités de moulage et les espaces de refroidissement ;
- le fluide de refroidissement est injecté dans l'espace de refroidissement, de chaque côté de la pièce moulée, sur la pièce moulée et selon une direction correspondant à un axe optique de la pièce moulée ; cela permet de répartir plus efficacement le fluide de refroidissement sur toute la surface de la pièce optique ;
- durant la mise en oeuvre du procédé selon l'invention, chaque portion de cavité de moulage portée par l'une des parties de moule reste en vis-à-vis de la même portion de cavité de moulage portée par l'autre des parties de moule et chaque portion de refroidissement portée par l'une des parties de moule reste en vis-à-vis de la même portion de cavité de refroidissement portée par l'une des parties de moule ; on déplace ainsi plus facilement la pièce moulée d'une station à l'autre.

L'invention a également pour objet un moule de pièce optique, notamment une pièce optique de dispositif lumineux de véhicule. Ce moule comprend :
- deux parties de moule se refermant l'une sur l'autre pour fermer le moule et s'écartant l'une en vis-à-vis de l'autre pour l'ouvrir,
- au moins une station de moulage comprenant une cavité de moulage dont les parois sont formées par une portion de chacune des deux parties de moule, la station de moulage comprenant des éléments d'injection d'un matériau dans la cavité de moulage,
- au moins une station de refroidissement comprenant un espace de refroidissement formé entre une portion de refroidissement de l'une des parties de moule et une portion de refroidissement de l'autre des parties de moule ;
   dans ce moule, la station de refroidissement comprend des éléments de maintien permettant le maintien de la pièce moulée à distance des portions de refroidissement lorsque le moule est fermé, et comprend des éléments d'injection d'un fluide de refroidissement à l'intérieur de l'espace de refroidissement.

Ainsi ce moule permet la mise en oeuvre du procédé selon l'invention. Le transfert en vis-à-vis de l'une des parties de moule peut être réalisé par un moyen de transfert intégré au moule ou distinct du moule.

Le moule selon l'invention peut optionnellement présenter une ou plusieurs des caractéristiques suivantes :
- le moule comprend plusieurs stations de moulage ; il est ainsi possible de réaliser une pièce par moulage de couches successives ; cela permet de réaliser des pièces épaisses en optimisant le temps de refroidissement et en améliorant la précision des surfaces de la pièce moulée ;
- une station de refroidissement est agencée entre chaque station de moulage ; cela permet de réaliser un refroidissement avant chaque surmoulage d'une nouvelle couche ;
- le moule comprend autant de stations de refroidissement que de stations de moulage ; cela permet de réaliser un refroidissement après chaque surmoulage d'une nouvelle couche ;
- les stations de moulage sont disposées en alternance avec les stations de refroidissement ; il est aisé de passer d'une station à l'autre par un mouvement similaire ou identique ; on facilite ainsi la production en série ;
- les stations sont réparties autour d'un axe ; ainsi cela permet de transférer les pièces moulées d'une station à l'autre par un mouvement de rotation selon un secteur angulaire donné ; cet axe peut notamment être un axe de rotation de l'une des parties de moule ou d'une sous-partie de l'une des parties de moule ;
- pour chaque cavité de moulage, la portion d'au moins l'une des parties de moule formant une partie des parois de cette cavité de moulage est formée par une empreinte principale, les empreintes principales étant de plus en plus profondes d'une station de moulage à l'autre ; cela permet d'augmenter graduellement l'épaisseur de la pièce moulée ;
- le moule comprend des organes de guidage du déplacement des parties de moule l'une par rapport à l'autre selon une direction de translation dans un sens ou dans l'autre pour ouvrir ou fermer le moule ; c'est un moyen simple et précis d'ouvrir ou fermer le moule ;
- à la ou à chaque station de moulage au moins l'une des parties de moule comprend au moins une portion creuse latérale s'étendant depuis la cavité de moulage et communiquant avec celle-ci, de manière à permettre le moulage dans la première station de moulage d'une pièce moulée avec une portion principale et au moins une excroissance latérale formées respectivement dans la cavité de moulage et dans la ou les portions creuses latérales, et de manière à permettre le logement de cette ou de ces excroissances dans la ou les portions creuses latérales de la ou des autres stations ; ces excroissances peuvent former les excroissances de maintien vues ci-dessus ;
- les éléments d'injection d'un matériau comprennent un conduit d'injection d'un matériau dans la cavité de moulage, comprenant la ou les portions creuses et au moins un conduit d'injection débouchant d'un côté dans la ou les portions creuses et de l'autre étant apte à être connecté à une presse d'injection de matériau, notamment de matériau polymère ; cela permet d'injecter le matériau dans la cavité en passant par les portions creuses latérales, et de simplifier le moulage ;
- à la ou au moins à l'une des stations de refroidissement, chaque partie de moule comprend un conduit de refroidissement primaire débouchant dans l'espace de refroidissement par un orifice de refroidissement formé dans la portion de refroidissement correspondante, chaque conduit de refroidissement primaire étant relié à un connecteur apte à être relié à un dispositif d'envoi d'un fluide de refroidissement, par exemple un compresseur lorsque ce fluide de refroidissement est un gaz ; cela permet d'envoyer directement le fluide de refroidissement sur la pièce moulée ;
- dans ce moule :
   o une première des parties de moule est une partie de moule fixe en rotation et une deuxième des parties de moule comprend une base et une structure rotative,
   o la ou les portions de cavité de moulage et la ou les portions de refroidissement portées par cette deuxième partie de moule sont fixées sur la base,
   o la structure rotative est apte à s'écarter de la base et de la ou des portions de cavité de moulage et de la ou des portions de refroidissement fixées sur cette base en se déplaçant d'une position rétractée vers une position déployée, dans laquelle la structure rotative est apte à tourner par rapport à la base, et
   o la structure rotative comprend des moyens de maintien de la pièce moulée sur cette structure rotative lorsque cette dernière s'écarte ou tourne par rapport à la base ;
   cela permet des mouvements simples en déplaçant la ou les pièces moulées et en conservant en position les portions de cavité de moulage et les portions de refroidissement en place ;
- la ou chaque étape de transfert d'une station donnée à une station suivante comprend en outre après la sous-étape de rotation :
   o une sous-étape de rapprochement de la structure rotative dudit support et de la ou des portions de cavité de moulage et de la ou des portions de refroidissement portées par la deuxième platine, de manière à ce que la pièce moulée soit en face de la portion de cavité ou de la portion de refroidissement correspondante,
   o une sous-étape de fermeture du moule ;
- la structure rotative est une platine rotative comprenant des logements d'insertion traversant l'épaisseur de la platine rotative, ces logements d'insertion étant agencés de manière à entourer la ou les portions de cavité de moulage et la ou les portions de refroidissement portées par cette deuxième platine dans ladite position rétractée et à être écartés de ceux-ci en position déployée ;
   cela permet d'entrainer de manière simple les pièces moulées avec la structure rotative et de les repositionner ensuite sur la station suivante ;
- selon l'alinéa précédent, la ou les portions de cavité de moulage et la ou les portions de refroidissement sont formées dans un bloc, notamment un insert amovible de la deuxième partie de moule, ce ou ces blocs présentant des dimensions permettant leur ajustement dans les logements d'insertion, dans la position rétractée ;
- les blocs des stations de refroidissement comprennent au moins une portion du conduit de refroidissement primaire ;
- les blocs des stations de refroidissement comprennent des canaux de passage d'un fluide de refroidissement distinct du conduit de refroidissement primaire et s'étendant entre une entrée et une sortie, débouchant chacune en dehors de l'espace de refroidissement ;
   on sépare ainsi le refroidissement direct de l'insert et celui de la pièce moulée ;
- l'un des logements de refroidissement, dit logement final, présente une ouverture d'extraction sur le côté du moule lorsque ce dernier est fermé, la profondeur de l'espace de refroidissement et la largeur de l'ouverture d'extraction étant agencées de manière à pouvoir extraire la pièce moulée sans ouvrir le moule.

Le procédé et le moule selon l'invention sont particulièrement adaptés à la réalisation d'une pièce optique de mise en forme, par exemple une lentille, apte à être installée à l'intérieur d'un projecteur de véhicule automobile pour dévier des rayons de lumière, la pièce optique étant transparente, et notamment une pièce comprenant une couche centrale et une ou plusieurs autres couches surmoulées.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- les figures 1 à 3 illustrent une vue en perspective avant d'une pièce moulée selon un exemple de procédé selon l'invention, après moulage successif respectivement d'une première, d'une deuxième et d'une troisième couche ;
- la figure 4 illustre une première partie de moule d'un exemple de moule selon l'invention ;
- la figure 5 illustre une deuxième partie de moule se refermant sur la première partie de moule de la figure 4 pour fermer le moule selon l'invention ;
- la figure 6 représente la partie de moule de la figure 4 mais avec des pièces moulées des figures 1 à 3, représentées telle qu'elles sont lorsque le moule est fermé ;
- la figure 7 représente la partie de moule de la figure 5 lorsque le moule est ouvert en cours de production de pièces moulées avec des pièces moulées des figures 1 à 3 ;
- la figure 8 illustre une platine rotative de la partie de moule de la figure 7 portant les pièces moulées ;
- la figure 9 diffère de la figure 7 en ce que la platine rotative de la figure 8 n'est pas représentée ;
- les figures 10, 11 et 12 illustrent des blocs des différentes stations de moulage représentés en figure 9 ;
- les figures 13 et 14 illustrent les blocs d'une première station de refroidissement montés respectivement sur la partie de moule illustrée en figure 5 et sur la partie de moule illustrée en figure 4 ;
- les figures 15 et 16 illustrent les blocs d'une deuxième station de refroidissement montés respectivement sur la partie de moule illustrée en figure 5 et sur la partie de moule illustrée en figure 4 ;
- la figure 17 illustre le bloc d'une troisième station de refroidissement monté sur la partie de moule illustrée en figure 5 ;
- la figure 18 est une coupe schématique des parties de moule des figures 4 et 5 refermées l'une sur l'autre, la coupe étant réalisée au niveau de la deuxième station de refroidissement selon un plan passant par l'axe optique des pièces moulées, telles que celle de la figure 2 et refroidies dans cette station de refroidissement ;
- la figure 19 est une coupe schématique au même niveau que la coupe de la figure 18 mais selon un plan passant par l'axe optique d'une seule des pièces moulées refroidies à cette station, ce plan s'étendant selon des excroissances de maintien de cette pièce moulée ;
- les figures 20a à 20f illustrent une étape de transfert d'un exemple de procédé selon l'invention.

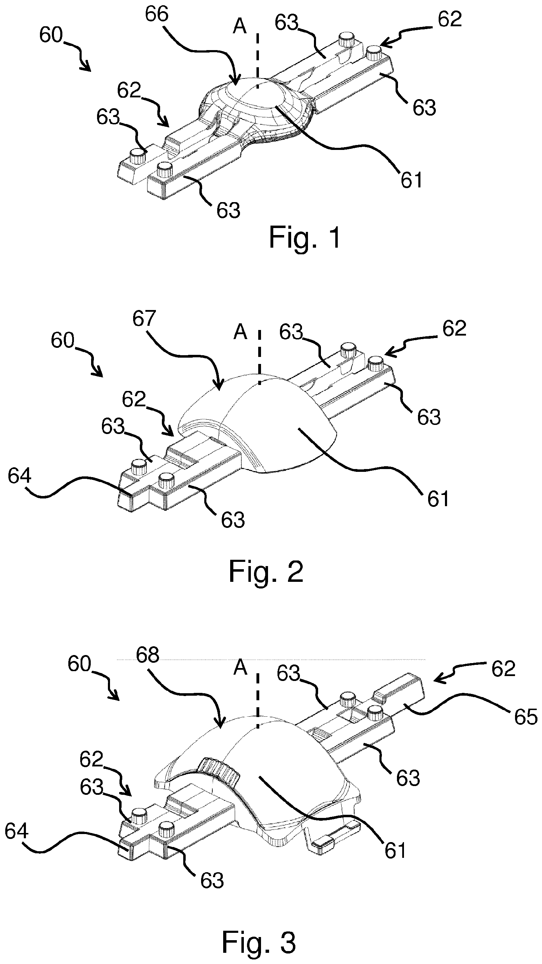

Les figures 1 à 3 illustrent une pièce moulée réalisée selon un exemple de réalisation d'un procédé de moulage selon l'invention. La pièce moulée 60 est illustrée en figures 1 à 3 après chacune des étapes de moulage de ce procédé.

En figure 3, on peut voir la pièce moulée 60 après la dernière étape de moulage et qui, dans cet exemple, présente une portion optique 61 destinée à former une pièce optique définitive, ici d'un dispositif lumineux de véhicule. Cette portion optique 61 est destinée à être traversée par les rayons lumineux lors de l'utilisation de la pièce optique, ici dans un dispositif lumineux de véhicule.

Dans cet exemple, cette portion et cette pièce optique sont une lentille 61.

Cette lentille 61 présente une surface avant visible en figure 3 et à l'opposé de celle-ci, une face arrière non visible sur cette figure 3.

Ces surfaces avant et arrière sont ici bombées et présentent chacune un sommet par lequel passe un axe optique A.

La figure 1 illustre la pièce moulée 60 après le moulage d'une première couche d'un matériau 66. Cette pièce moulée comprend la portion optique 61 et, de part et d'autre de cette portion optique 61, deux excroissances de maintien 62.

L'axe optique A de la lentille, formée en figure 3, correspond ici également à l'axe optique de la portion optique 61 en figure 1 et à celui de la portion optique 61 en figure 2.

Sur les côtés de cette portion optique 61 sont agencées des excroissances de maintien 62, c'est-à-dire de part et d'autre des surfaces avant et arrière, environ transversalement à l'axe optique A.

Après moulage de la première couche 66, ces excroissances de maintien 62 sont formées par deux barres transversales 63, notamment parallèles, entre lesquelles est ménagé un espace de comblement.

La figure 2 illustre la pièce moulée 60 après surmoulage d'une deuxième couche 67 sur la première couche 66. On y retrouve la portion optique 61 et les excroissances de maintien 62. La deuxième couche 67 recouvre donc la portion optique 61 formée par la première couche 66, en avant et en arrière de celle-ci.

Cette deuxième couche 67 s'étend ici également dans l'espace de comblement de l'une des excroissances de maintien 62, formant ainsi une première portion de comblement 64.

La figure 3 illustre la pièce moulée 60 après surmoulage d'une troisième couche 68 sur la deuxième couche 67. On y retrouve la portion optique 61 et les excroissances de maintien 62. La troisième couche 68 recouvre donc la portion optique 61 formée par la deuxième couche 67, en avant et en arrière de celle-ci, formant ainsi la lentille.

Cette troisième couche 68 s'étend ici également dans l'espace de comblement de l'autre des excroissances de maintien 62 en formant une deuxième portion de comblement 65.

Selon l'invention, l'axe optique A de la portion optique 61 peut être celui par rapport auquel sont calculées les formes de ses dioptres, dans cet exemple les surfaces avant et arrière de la portion optique 61 après chaque moulage d'une couche de la pièce moulée 60 correspondante.

L'axe optique A peut être, comme ici, l'axe selon lequel, tout rayon lumineux arrivant selon cet axe optique A sur la portion optique 61 passe au travers de cette portion optique depuis sa face arrière jusqu'à sa face avant sans être dévié.

Le moule permettant de mouler différentes pièces moulées 60, telles que celle illustrée en figure 1 à 3, comprend deux parties de moule, se refermant l'une sur l'autre pour fermer le moule et s'écartant l'une de l'autre pour l'ouvrir.

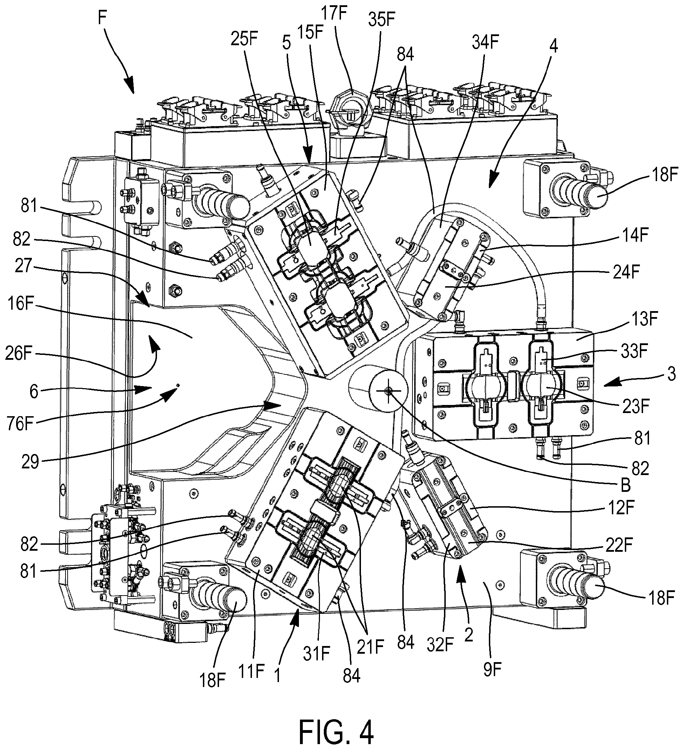

La figure 4 illustre une première partie de moule F, qui dans cet exemple est fixe et sera donc appelé ci-après partie de moule fixe F. Celle-ci, comprend notamment sur sa face dite interne quatre arbres de guidage 18F répartis à chacun de ses coins.

Ici, la face interne de la partie de moule fixe F est carrée. Cette forme de réalisation n'est pas limitative.

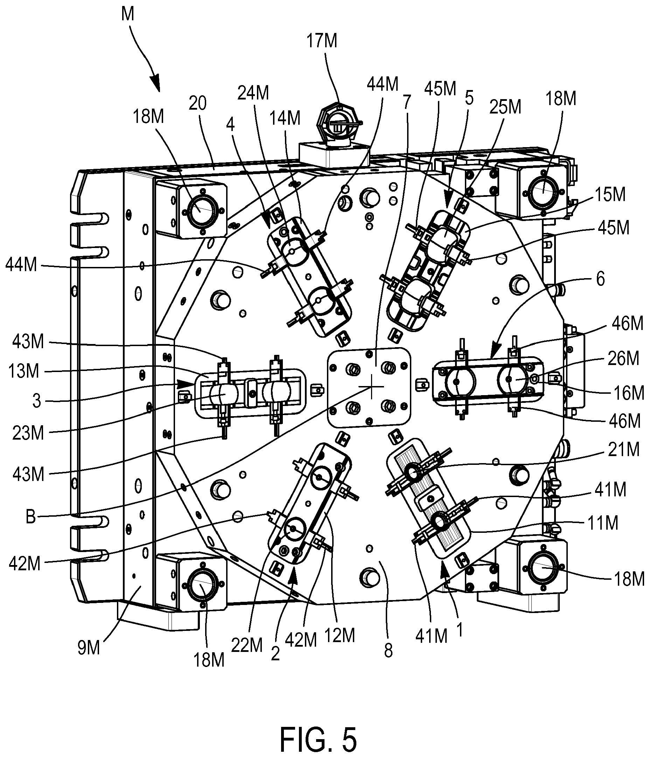

La deuxième partie de moule, illustrée en figure 5, est une partie apte à se déplacer en translation par rapport à la partie de moule fixe F, notamment comme on peut le voir en figure 5, selon un axe B passant par le centre de la face interne de la partie de moule mobile M et par le centre la face interne de la partie de moule fixe F. Cette deuxième partie sera appelée ci-après partie de moule mobile M.

Chacune de ces parties de moule F, M, comprend un anneau de levage 17F, 17M permettant de les déplacer et de les monter sur une installation de moulage, de manière à ce que les faces internes de chacune de ces parties de moule F, M soient agencées en vis-à-vis. Autrement dit les faces visibles en figure 4 et 5 sont montées en vis-à-vis l'une de l'autre.

Dans cet exemple, la partie de moule mobile M comprend des fûts de guidage 18M, à l'intérieur desquels viennent se loger les arbres de guidage 18F pour guider les deux parties de moule M, F en déplacement l'une par rapport à l'autre en translation.

Selon une réalisation de l'invention, comme dans cet exemple, le moule comprend trois stations de moulage 1, 3, 5 et trois stations de refroidissement 2, 4, 6.

Ici, les trois stations de refroidissement 2, 4, 6 sont agencées en alternance avec les trois stations de moulage 1, 3, 5.

Dans cet exemple, chaque station est agencée réaliser une étape de moulage ou de refroidissement de deux pièces moulées de manière simultanée.

Selon l'invention, comme dans cet exemple, les stations de moulage 1, 3, 5 peuvent comprendre chacune deux blocs de moulage: un bloc de moulage 11F, 13F, 15F fixé sur la partie de moule fixe F et un bloc de moulage 11M, 13M, 15M fixé sur la partie de moule mobile M.

Comme illustré, chacun de ces blocs de moulage peut comprendre deux empreintes de moulage. Les deux empreintes de moulage 21F, 23F, 25F des blocs de moulage 11F, 13F, 15F de la partie de moule fixe F se réunissent avec les empreintes de moulage 21M, 23M, 25M des blocs de moulage 11M, 13M, 15M de la partie de moule mobile M pour former les deux cavités de moulage correspondantes de chacune des stations de moulage 1, 3, 5. Les empreintes de moulage forment les parois des cavités de moulage.

Une fois le moule fermé, il est possible d'injecter un matériau dans chacune des cavités de moulage jusqu'à remplir celles-ci complètement et former la pièce moulée 60 correspondante.

Ici, sur chaque partie de moule F, M, les empreintes sont de plus en plus profondes en allant de la station de moulage de la première couche à celle de la troisième couche.

Pareillement, les stations de refroidissement peuvent comprendre chacune deux blocs de refroidissement, comme c'est le cas pour la première et la deuxième stations de refroidissement 2 et 4 :
- un bloc de refroidissement 12F, 14F fixé sur la partie de moule fixe F, notamment sur une base fixe 9F de la partie de moule fixe F, et
- un bloc de refroidissement 12M, 14M fixé sur la partie de moule mobile M, notamment sur une base mobile 9M de la partie de moule mobile M.

À noter que dans cet exemple, au niveau de la troisième station de refroidissement 6, la partie de moule fixe F est dépourvue d'un bloc de refroidissement. A la place, la base fixe 9M comprend une cavité d'éjection 16F, visible en figure 4, de taille supérieure à celle du bloc de refroidissement 16M porté par la partie de moule mobile M de cette troisième station de refroidissement 6.

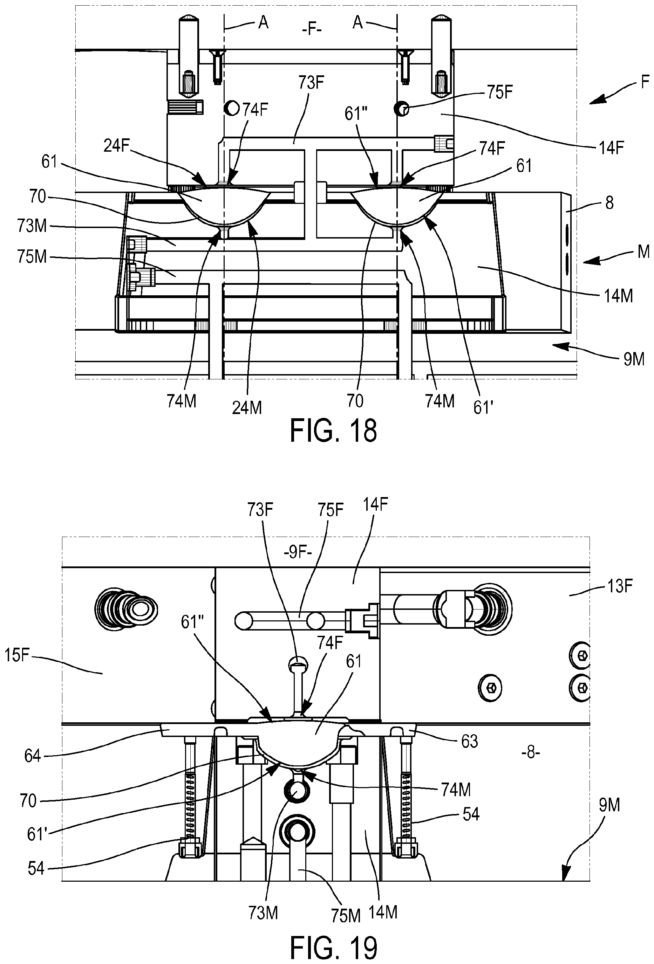

Lorsque les blocs de refroidissement 12F et 12M, 14F et 14M des première et deuxième stations de refroidissement sont en vis-à-vis, un espace de refroidissement 70 est formé entre eux (ces espaces de refroidissement 70 sont référencés en figures 18 et 19). De même lorsque le bloc de refroidissement 16M de la troisième station de refroidissement et la cavité d'éjection 16F sont en vis-à-vis, un espace de refroidissement est formé entre eux. La lentille correspondante 61 peut être positionnée dans ces espaces de positionnement 70 pour qu'un fluide de refroidissement, tel qu'un gaz, y soit envoyé.

Selon l'invention comme dans cet exemple, le refroidissement de la pièce moulée dans les espaces de refroidissement 70 peut être réalisé moule fermé. L'espace de refroidissement 70 est ainsi plus réduit, améliorant la concentration du fluide de refroidissement contre et autour de la portion optique correspondante 61.

Selon l'invention, comme dans cet exemple, pour confiner davantage la pièce moulée 60 dans l'espace de refroidissement 70, les stations de refroidissement 2, 4, 6 comprennent des creux dans lesquels sont logées les pièces moulées 60 pour leur refroidissement. Ces creux peuvent être des creux concaves et/ou des creux formés par une gorge.

Dans l'exemple illustré, les creux de la partie de moule mobile M sont portés par les blocs de refroidissement 12M, 14M, 16M des stations de refroidissement correspondantes 2, 4, 6. Ces creux sont ici des creux concaves 22M, 24M, 26M et dénommés ainsi ci-après.

Selon l'invention, comme dans cet exemple, les creux concaves 22M, 24M, 26M peuvent avoir une profondeur et une largeur supérieure à celles de l'empreinte de moulage de la station de moulage 1, 3, 5 précédente, de manière à ce que la pièce moulée 60 ou une portion de celle-ci, ici la face avant de la portion optique 61, se loge dans le creux concave correspondant à distance de la paroi du creux concave. Cela facilite le guidage de l'air autour d'un côté de la pièce moulée 60. Dans cet exemple, c'est d'autant plus intéressant que la face avant de la portion optique 61 est fortement bombée.

Cette distance entre les parois des creux concaves et la portion optique 61 peut être minimisée pour améliorer le confinement, tout en laissant passer le fluide de refroidissement.

Dans l'exemple illustré, les creux de la partie de moule fixe F sont portés par les blocs de refroidissement 12F, 14F des stations de refroidissement correspondantes 2, 4. Ces creux sont ici des gorges 22F, 24F et dénommés ainsi ci-après.

Selon l'invention, comme dans cet exemple, les blocs de moulage 11F, 13F, 15F portés par la partie de moule fixe F, comprennent des arrivées d'injection d'un matériau et une sortie d'injection de matériau (non visibles sur les figures) pour amener le matériau fondu dans les cavités de moulage correspondantes. Les arrivées d'injection et les sorties d'injection sont reliées à des conduites d'injection, non représentées, reliées à une presse d'injection, non représentée, de l'installation de moulage.

Ces blocs de moulage 11F, 13F, 15F peuvent également comprendre des évents pour évacuer le gaz comprimé par le matériau d'injection.

Un circuit de refroidissement secondaire est prévu pour alimenter ces blocs de moulage 11F, 13F, 15F par un fluide de refroidissement, ici de l'eau, circulant à l'intérieur de ces blocs pour contrôler la température des parois des cavités de moulage. Dans l'exemple illustré en figure 4, on peut observer des arrivées d'eau 81 et des sorties d'eau 82 pour amener l'eau dans le bloc de moulage correspondant 11F, 13F, 15F et l'évacuer de celui-ci. En figure 4, on peut également observer des ponts de régulation 84 formés par des conduites reliant les blocs de moulage 11F, 13F, 15F entre eux et permettant de réguler la circulation du fluide de refroidissement entre ces blocs de moulage.

Comme on peut le voir en figure 5, la base mobile 9M n'est cependant mobile ici qu'en translation. La partie de moule mobile M comprend également une structure rotative, ici une platine rotative 8, mobile en rotation par rapport à la base mobile 9M.

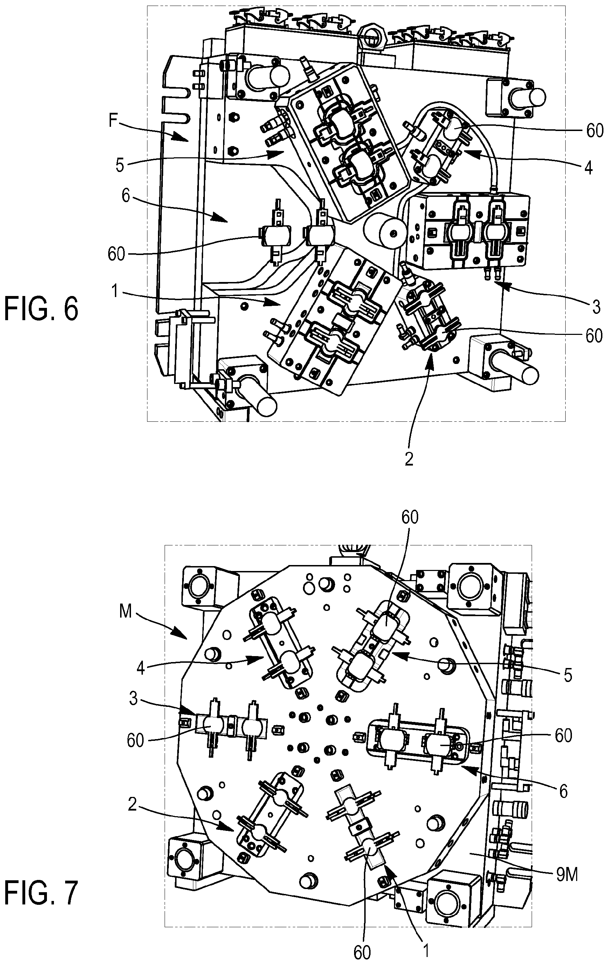

La figure 6 et la figure 7 représentent chacune l'une des parties de moule F, M avec les pièces moulées 60 en position dans chacune des stations 1 à 6, lors de la fermeture du moule mais avec l'autre partie de moule M, F non représentée, pour permettre la visualisation de ces pièces moulées 60.

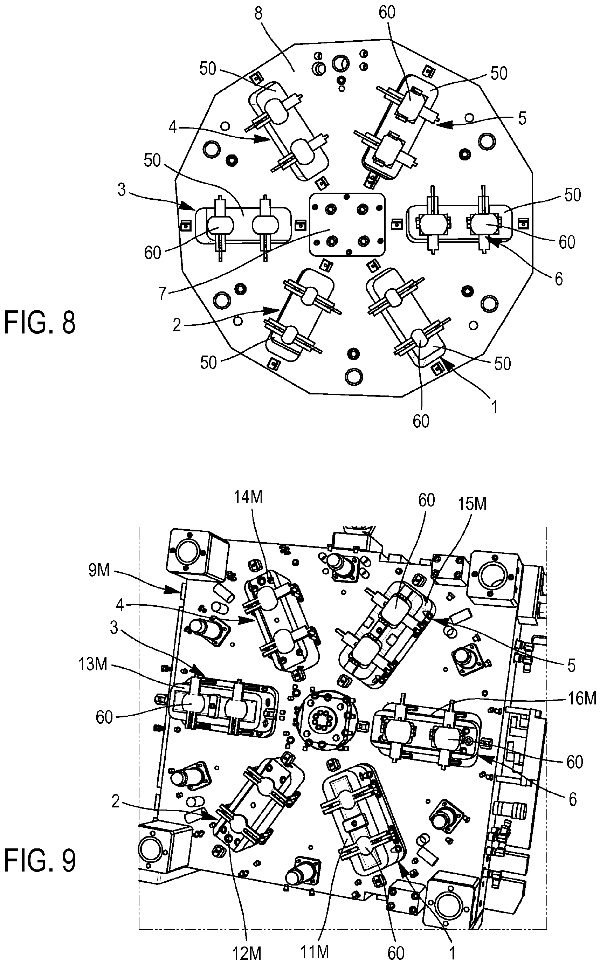

En figure 8, on peut voir la platine rotative 8 portée par une platine d'indexage 7. Un arbre de transfert 10, représenté en figure 9, entraîne la platine d'indexage 7, et donc la structure rotative 8, en translation et en rotation selon l'axe de rotation B.

La platine rotative 8 comprend des ouvertures d'insertion 50, s'étendant radialement autour de l'axe de rotation B de la platine d'indexage 7.

La figure 9 représente la figure 7 mais sans la platine rotative 8, afin de mieux visualiser les blocs 11M à 16M fixés sur la base mobile 9M.

En figure 7, on peut voir les blocs 11M à 16M insérés et ajustés dans ces ouvertures d'insertion 50 de manière à pouvoir coulisser à l'intérieur de ces ouvertures d'insertion 50.

Ainsi, la platine rotative 8 peut être entraînée en avant de la base mobile 9M par l'arbre de transfert 10 jusqu'à ce que celle-ci se désengage des blocs 11M à 16M. Ensuite, l'arbre de transfert entraine la platine rotative 8 en rotation, de manière à ce que les logements d'insertion 50 soient décalés d'un secteur angulaire, ici de 60°, dans le sens des aiguilles d'une montre en figure 7, les amenant à la station suivante.

Lorsque le transfert est effectué, l'arbre de transfert 10 ramène la platine rotative 8 vers la base mobile 9M, les blocs 11M à 16M s'insèrent dans l'un des logements d'insertion 50.

Comme on peut le voir sur ces figures 7 à 9, les excroissances de maintien 62 des pièces moulées 60 dépassent des côtés des différents blocs 11M à 16M. Ces excroissances de maintien 62 sont en avant de la platine rotative 8 sur les figures 7 et 8, facilitant ainsi leur entrainement de manière solidaire avec cette platine rotative. Les pièces moulées 60 étant ainsi maintenues sur la structure rotative 8, cela permet de les faire passer d'une station à la suivante.

Ainsi la rotation de la structure rotative d'un secteur angulaire donné, ici de 60°, permet de faire passer chaque pièce moulée d'une station 1, 2, 3, 4, 5 à une station suivante 2, 3, 4, 5, 6, à l'exception des pièces déjà présentes à la dernière station, ici la troisième station de refroidissement 6, qui elles sont éjectées avant la rotation de cette platine rotative 8.

Dans les figures 6 à 9, on peut voir les pièces moulées 60 dans les différentes stations à un instant du procédé de fabrication, qui sera décrit plus loin:
- en première station 1, à savoir en première station de moulage, on peut voir deux pièces moulées 60 correspondant à la première couche qui viennent d'être moulées,
- en deuxième station 2, à savoir en première station de refroidissement, on peut voir deux pièces moulées 60 obtenues auparavant dans la première station 1 et qui sont en cours de refroidissement,
- en troisième station 3, à savoir en deuxième station de moulage, on peut voir deux pièces moulées 60 refroidies auparavant dans la deuxième station 2 et dont la deuxième couche vient d'être injectée,
- en quatrième station 4, à savoir en deuxième station de refroidissement, on peut voir deux pièces moulées 60 obtenues auparavant dans la troisième station 3 et qui sont en cours de refroidissement,
- en cinquième station 5, à savoir en troisième station de moulage, on peut voir deux pièces moulées 60 refroidies auparavant dans la quatrième station 4 et dont la troisième couche vient d'être injectée,
- en sixième station 6, à savoir en troisième station de refroidissement, on peut voir deux pièces moulées 60 obtenues auparavant dans la cinquième station 5 et qui sont en cours de refroidissement, avant d'être enlevées du moule.

Ainsi dans ce moule, douze pièces moulées 60 sont en cours de réalisation après chaque fermeture de moule, à des étapes différentes de leur fabrication.

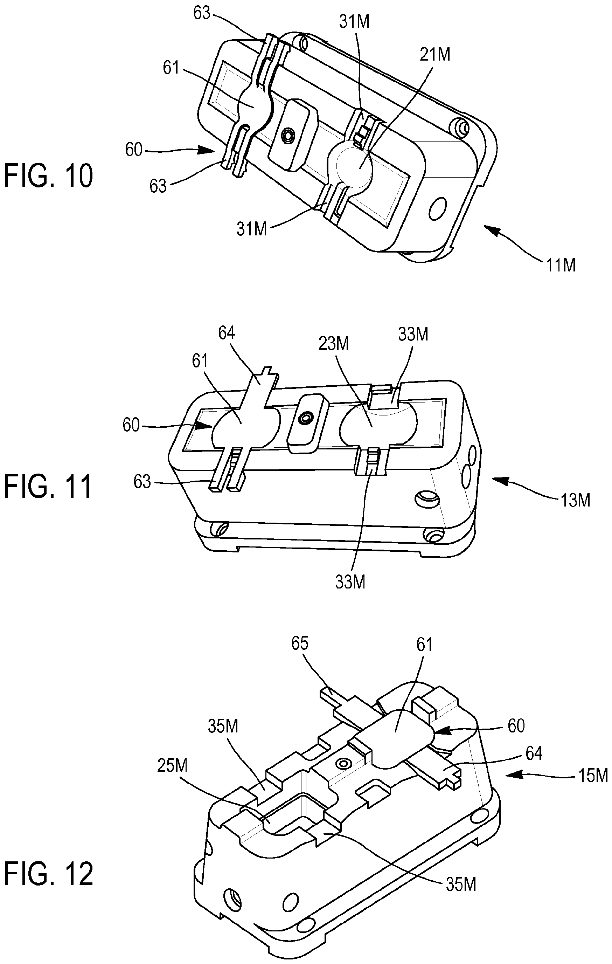

Les figures 10 à 12 illustrent en détails les blocs de moulage 11M, 13M, 15M de la partie de moule mobile M, ces blocs étant respectivement ceux de la première station de moulage 1, de la deuxième station de moulage 3, de la troisième station de moulage 5.

Sur ces figures 10 à 12, pour faciliter la comparaison, on a illustré l'une des empreintes 21M, 23M, 25M de ces blocs de moulage vide et l'autre de ces empreintes remplie par la couche correspondante.

Chacun de ces blocs de moulage 11M, 13M, 15M comprend des rainures latérales 31M, 33M, 35M débouchant dans l'empreinte de moulage correspondante 21M, 23M, 25M.

De l'autre côté, ces rainures latérales 31M, 33M, 35M débouchent sur le côté du bloc de moulage 11M, 13M, 15M correspondant et sont agencées de manière à communiquer avec des rainures complémentaires 41M, 43M, 45M, formées sur la surface de contact de la platine rotative 8, à savoir la surface visible en figure 7 et en vis-à-vis de la partie de moule fixe F.

Lorsque le moule est fermé, ces rainures latérales 31M, 33M, 35M et ces rainures complémentaires 41M, 43M, 45M sont agencées en vis-à-vis de rainures latérales, dites rainures fixes 31F, 33F, 35F débouchant dans les empreintes de moulage 21F, 23F, 25F des blocs de moulage correspondants 11F, 13F, 15F de la partie de moule fixe F. Ces rainures forment ainsi des portions creuses latérales, qui ici forment ensemble des conduits latéraux débouchant dans les cavités de moulage et qui une fois remplis permettent de mouler les excroissances de maintien 62 de la pièce moulée 60 correspondante.

De ce fait, comme on peut le voir en figures 10 à 12, une fois moulées, les excroissances de maintien 62 dépassent du bloc de moulage correspondant 11M, 13M, 15M et se logent dans les rainures complémentaires 41M, 43M, 45M. Ainsi, lorsque la structure rotative 8 s'écarte de la base mobile 9M, elle entraine la pièce moulée 60 avec elle et l'enlève du bloc de moulage 11M, 13M, 15M correspondant.

Selon l'invention, comme ici, les arrivées d'injection et les sorties d'injection, peuvent être reliées respectivement à des orifices d'injection et des orifices d'évacuation débouchant dans lesdits conduits latéraux. Ces derniers canalisent donc le matériau jusque dans la cavité de moulage correspondante.

Ici, dans le cas de la deuxième station de moulage 3, les différentes rainures 33M, 43M, 33F permettent d'accueillir les excroissances de maintien 62, et sont agencées de manière à maintenir la portion optique 61 à distance des parois de la cavité de moulage 23F/23M de cette deuxième station de moulage 3. Ainsi lorsqu'on injecte le matériau, la deuxième couche 67 recouvre la face avant et la face arrière la portion optique 61 logée dans la cavité de moulage correspondante.

Par ailleurs, sur l'un des côtés de la cavité de moulage 23F/23M, les rainures forment deux conduits latéraux parallèles de manière à loger de manière ajustée les barres transversales 63 de la pièce moulée 60 avec sa première couche.

En revanche, sur l'autre côté de cette cavité de moulage 23F/23M, un seul conduit latéral est présent. Ce conduit latéral est agencé pour maintenir des barres transversales 63 mais en laissant l'espace de comblement entre les barres transversales 63 déboucher dans la cavité de moulage. Ainsi, à l'injection de la deuxième couche 67, le matériau rempli cet espace de comblement et forme la première portion de comblement 64, conférant à l'excroissance de maintien 62, située de ce côté-là, la forme d'une barre pleine.

Comme dans cet exemple, dans le cas de la troisième station de moulage 5, un seul conduit latéral est agencé de chaque côté de la cavité de moulage, pour d'un côté accueillir l'excroissance de maintien en forme de barre pleine et de l'autre les deux barres transversales 63. De la même manière qu'à la deuxième station de moulage 3, le conduit latéral accueillant les deux barres transversales 63 est agencé de manière à ce que le matériau remplisse l'espace de comblement et forme la deuxième portion de comblement 65, conférant à l'excroissance de maintien 62, située de ce côté-là, également la forme d'une barre pleine.

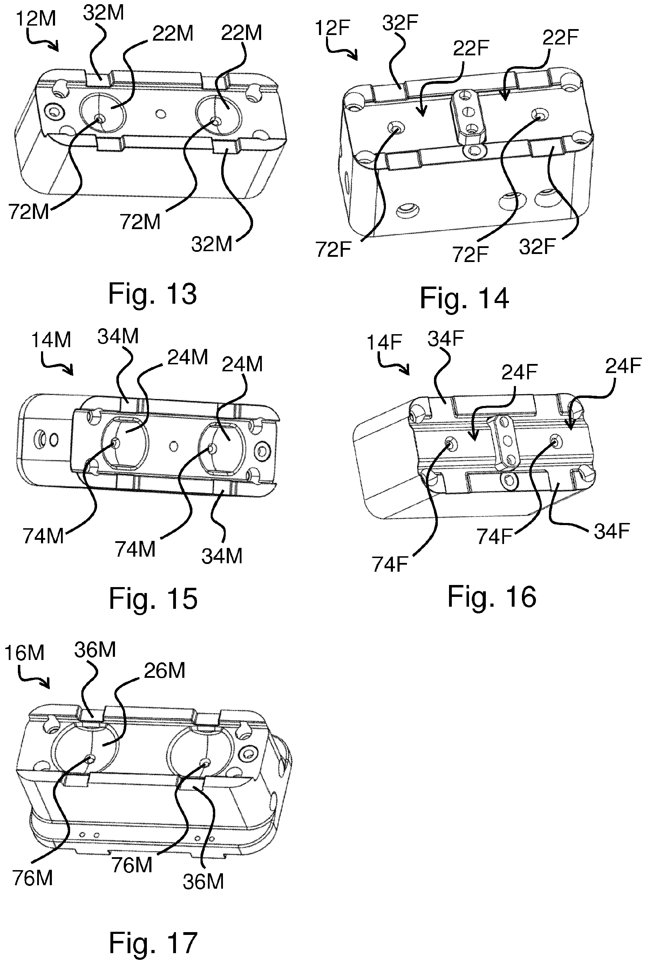

Les figures 13 à 17 illustrent les blocs de refroidissement du moule.

Les figures 13, 15 et 17 illustrent respectivement les blocs de refroidissement 12M, 14M, 16M des première, deuxième et troisième stations de refroidissement et qui sont fixés contre la base mobile 9M, visible en figure 9.

Les figures 14 et 15 illustrent les blocs de refroidissement 12F, 14F des première et deuxième stations de refroidissement 2, 4, qui sont fixés contre la base fixe 9F, et qui s'agencent, lorsque le moule est fermé en vis-à-vis des blocs de refroidissement 12M, 14M, correspondants de la partie de moule mobile M, illustrés aux figures 13 et 15.

Chacun des blocs de refroidissement 12F, 12M, 14F, 14M des deux premières stations de refroidissement 2, 4, comprend des logements latéraux 32F, 32M, 34F, 34M pour loger les excroissances de maintien 62, ici de manière ajustée. Ces logements latéraux 32F, 32M, 34F, 34M sont agencés de manière à ce qu'une fois le moule refermé, les pièces moulées 60 sont maintenues par les excroissances de maintien 62, avec la surface avant et la surface arrière de la portion optique 61 à distance des parois des creux concaves 22M, 24M et des parois des gorges 22F, 24F correspondants. Ces parois sont dites parois de refroidissement. Autrement dit une fois le moule refermé, les blocs de refroidissement 12F, 12M, 14F, 14M forment un espace de refroidissement 70 délimité par ces parois de refroidissement, qui forment les portions de refroidissement des première et deuxième stations de refroidissement 2, 4.

Comme on peut le voir en figure 4, la cavité d'éjection présente un fond formé par un fond vertical 26F, s'étendant dans un plan perpendiculaire à l'axe de rotation B, et en vis-à-vis des creux concaves 26M du bloc de refroidissement 16M, porté par la partie de moule mobile M à cette troisième station de refroidissement 6 et illustré en figure 17.

Ici, la cavité d'éjection 16F est délimitée sur les côtés, en haut, en bas et à droite en figure 4, par une paroi latérale 29. Cette cavité d'éjection 16F est ouverte au niveau du bord de la base mobile 9M par une ouverture d'éjection 27.

Ainsi, lorsque le moule est fermé, les pièces moulées 60 peuvent être refroidies dans l'espace de refroidissement formé entre le fond vertical 26F, les parois latérales 29 et le bloc de refroidissement 16M situé en vis-à-vis de ce fond.

Le bloc de refroidissement 16M de la partie de moule mobile M de cette troisième station de refroidissement 6 comprend également des logements latéraux pour loger les excroissances de maintien 62, ici de manière ajustée. Ces logements latéraux sont agencés de manière à ce qu'une fois le moule refermé, les pièces moulées sont maintenues par les excroissances de maintien 62, avec la surface avant et la surface arrière de la portion optique 61 à distance des parois des creux concaves 26M de ce bloc de refroidissement-ci 16M et du fond vertical 26F. Ces parois et ce fond 26F forment donc des parois de refroidissement et donc les portions de refroidissement de la troisième station de refroidissement 6.

Chaque creux concave 22M, 24M, 26M comprend ici en son fond un orifice d'arrivée d'air, respectivement 72M, 74M, 76M, ici agencé en son fond et relié à un conduit de refroidissement primaire permettant l'acheminement de l'air. Chacun de ces orifices 72M, 74M, 76M peut, comme ici, être agencé de manière à envoyer de l'air au centre de la surface avant 61' de la portion optique 61, comme on peut le voir en figures 18 et 19.

Pareillement, chaque gorge 22F, 24F, comprend en son fond deux orifices d'arrivée d'air, respectivement 72F, 74F. Chaque orifice est relié à un conduit de refroidissement primaire permettant l'acheminement de l'air. Chacun de ces orifices 72F, 74F peut être agencé de manière à envoyer de l'air au centre de la surface arrière 61'' de la portion optique 61.

De même, dans cet exemple, un orifice 76F est aménagé dans le fond vertical 26F et relié à un conduit de refroidissement primaire pour envoyer de l'air du côté des surfaces arrière 61'' des potions optiques 61, situées en sixième station 6.

Les conduits de refroidissement primaires sont par exemple alimentés en air par un compresseur.

Il est ainsi possible d'envoyer de l'air de chaque côté des pièces moulées 60, plus particulièrement de leur portion optique 61.

Les figures 18 et 19 illustrent des coupes de la deuxième station de refroidissement 4 lorsque le moule est fermé.

En figure 18, la coupe est réalisée selon un plan selon la longueur d'un bloc de refroidissement 14M, c'est-à-dire perpendiculairement aux surfaces des deux parties fixe F et mobile M. De plus, ce plan de coupe passe par les axes optiques A de chacune des pièces moulées 60 refroidies à cette station 4.

La figure 19, représente la même station de refroidissement 4 mais selon un plan de coupe différent, passant par l'axe optique A de l'une des pièces moulées 60 et parallèlement aux excroissances de maintien 62. Seule une des pièces moulées 60 refroidies à cette station 4 est donc visible.

Le bloc de refroidissement 14F monté sur la base fixe 9F est positionné contre et en vis-à-vis du bloc de refroidissement 14M porté par la base mobile 9M et logé dans la platine rotative 8. Ces blocs 14F/14M définissent entre eux deux espaces de refroidissement 70 à l'intérieur desquels sont logées les portions optiques 61 de deux pièces moulées 60.

La surface arrière 61'' et la surface avant 61' de chacune des portions optiques 61 sont positionnées à distance des parois de refroidissement formées respectivement par la paroi du creux concave 24M et de la gorge 24F.

Les orifices d'arrivée d'air 74M, 74F débouchent de part et d'autre de la portion optique 61. Ces orifices 74M, 74F sont reliés à des canaux de circulation de l'air 73M, 73F, ménagés à l'intérieur de ces blocs de refroidissement 14M, 14F et qui forment des portions du conduit de refroidissement primaire.

Ce dispositif de moulage permet donc d'injecter de l'air dans les logements de refroidissement 70 entre les surfaces 61', 61'' de la portion optique 61 et les portions de refroidissement 24M, 24F ; cela permet ainsi un refroidissement rapide de la pièce moulée 60.

Selon l'invention, comme illustré ici en figure 19, des éjecteurs 54 peuvent être montés sur ou dans la structure rotative 8 et de part et d'autre du bloc de refroidissement 12M, 14M, 16M correspondant. Ici ces éjecteurs sont montés dans la platine rotative 8.

Ces éjecteurs 54 sont agencés de manière à former des moyens de maintien supplémentaires retenant la pièce moulée 60 par ses excroissances de maintien 62 sur la structure rotative 8.

Selon l'invention, comme ici, ces éjecteurs 54 sont télescopiques et peuvent ainsi se déployer hors et en avant de la platine rotative 8 de manière à faciliter l'éjection de la pièce moulée 60 lors de sa récupération en station 6.

Ici, les blocs de refroidissement 12M, 12F, 14M, 14F, 16M comprennent des canaux de passage 75M, 75F d'un fluide de refroidissement, tel que de l'eau, distincts des canaux de circulation de l'air 73M, 73F. La connexion des canaux de passage 75M, 75F au reste du circuit de refroidissement secondaire se fait sur les côtés des blocs de refroidissement 12F, 14F pour la partie de moule fixe F, et sur l'arrière du bloc de refroidissement 12M, 14M, 16M pour la partie de moule mobile M. En figure 18, on peut voir en face arrière du bloc de refroidissement 14M de la partie de moule mobile M, que les canaux de passage 75M de ce bloc-ci 14M débouchent en vis-à-vis de sorties 77M d'une canalisation 78M portées par la base mobile 9M. Ces canaux et ces canalisations forment le circuit de refroidissement secondaire, notamment pour la circulation d'eau, pour refroidir le bloc de refroidissement 15M.

Bien que cela ne soit pas représenté, le même type de circuit de refroidissement secondaire peut être agencé dans les blocs de moulage 11M, 13M, 15M et dans la base mobile 9M.

Le procédé d'utilisation de ce moule va maintenant être décrit.

Lorsqu'un premier cycle de formation de pièces optiques 60 commence, le moule est fermé.

Une première injection de matériau a lieu dans la première station 1 à l'intérieur des cavités de moulage 21F/21M correspondantes.

Une fois les deux pièces moulées 60 moulées, comme illustrée en figure 1, et celles-ci refroidies suffisamment pour être démoulées, on réalise une étape de transfert des deux pièces moulées 60 en deuxième station 2.

La première étape de refroidissement commence, en envoyant de l'air de chaque côté des portions optiques 61 des pièces moulées formant cette première couche 66.

Une fois suffisamment refroidies pour que l'on passe au moulage de la deuxième couche, on procède à une étape de transfert des pièces moulées 60 en troisième station 3.

Une deuxième injection de matériau a lieu dans la troisième station 3 à l'intérieur des cavités de moulage 23F/23M correspondantes.

Une fois chaque pièce moulée 60 moulée à cette troisième station 3, comme illustrée en figure 2, et celle-ci refroidie suffisamment pour être démoulée, on réalise une étape de transfert de ces deux pièces moulées 60 à la quatrième station 4.

La deuxième étape de refroidissement commence, en envoyant de l'air de chaque côté des portions optiques 61 de chaque pièce moulée illustrée en figure 2.

Une fois suffisamment refroidies pour que l'on passe au moulage de la troisième couche, on procède à une étape de transfert des pièces moulées 60 en cinquième station 5.

Une troisième injection de matériau a lieu dans la cinquième station 5, à l'intérieur des cavités de moulage 25F/25M correspondantes.

Une fois chaque pièce moulée 60 moulée, comme illustrée en figure 3, et celle-ci refroidie suffisamment pour être démoulée, on réalise une étape de transfert des deux pièces moulées 60 en sixième station 6.

La sixième étape de refroidissement commence, en envoyant de l'air de chaque côté des portions optiques 61 des pièces moulées illustrée en figure 3.

Une fois suffisamment refroidies pour être éjectée, on procède à l'étape d'enlèvement des pièces moulées 60 du moule par l'ouverture d'éjection 27.

On a ainsi réalisé un cycle de production de deux pièces moulées 60.

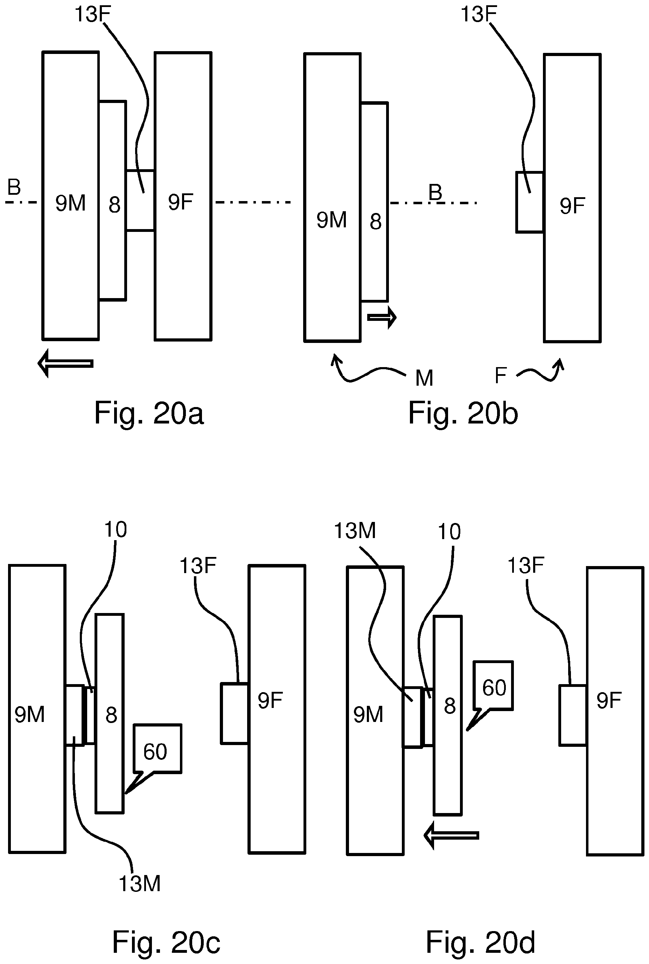

Chaque étape de transfert est ici identique. Les figures 20a à 20f illustrent schématiquement une étape de transfert. Seule la position des pièces moulées transférées de la deuxième station 2 à la troisième station 3 est représentée par la référence « 60 ». Bien entendu, simultanément, les pièces moulées des autres stations sont transférées aux stations suivantes (sauf celles de la station 6 qui ont été enlevées).

Dans une première sous-étape de l'étape de transfert, le moule est ouvert selon une translation selon l'axe de rotation B, représentée par la flèche illustrée en figures 20a, en écartant la partie de moule mobile M de la partie de moule fixe F.

Dans une deuxième sous-étape, une translation de la platine rotative 8 par rapport à la base mobile 9M selon une direction parallèle à l'axe de transfert B, translation représentée par la flèche illustrée en figures 20b, est réalisée, jusqu'à ce que la platine rotative atteigne la position déployée illustrée en figure 20c. A noter qu'en figure 20c, l'arbre de transfert 10 n'est pas visible, car masqué par le bloc de moulage 13M de la deuxième station de moulage 13M. Par ailleurs, pour des raisons de clarté des dessins, seul ce bloc 13M a été représenté ; les autres blocs 11M, 12M, 14M à 16M ne sont pas représentés mais sont également restés fixés sur la base mobile 9M.

Dans une quatrième sous-étape, la platine rotative 8 est mise en rotation, les pièces moulées 60 passant au niveau de la station suivante. De la figure 20c à la figure 20d, est représenté le passage de la pièce moulée 60 depuis la première station de refroidissement 2 jusqu'au niveau de la deuxième station de moulage 3.

Dans une cinquième sous-étape, la platine rotative 8 est ramenée vers la base mobile 9M, selon la flèche illustrée en figure 20d. Les blocs 11M à 16M s'insèrent dans les logements d'insertion 50.

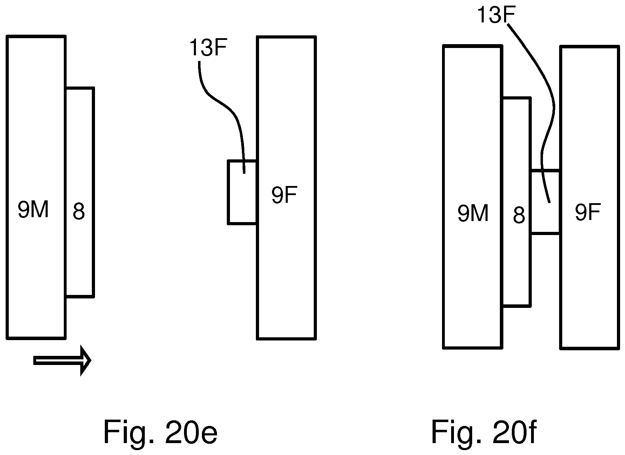

Dans une sixième sous-étape, la partie de moule mobile M est ramenée contre la partie de moule fixe F selon un mouvement de translation, représenté par la flèche en figure 20e. Les blocs de refroidissement correspondant 13M et 13F se referment autour de la pièce moulée 60, avec leur parois à distance de la portion optique 61. Le moule est fermé, comme illustré en figure 20f. L'étape de transfert est terminée.

Le deuxième cycle est réalisé en décalage d'une rotation par rapport au premier cycle, et ainsi de suite chaque n^{ème} cycle étant réalisé en décalage d'une rotation par rapport au cycle précédent. Autrement dit, chaque cycle donné commence quand les pièces moulées du cycle précédent sont passées en deuxième station et se termine par l'éjection, lorsque les pièces moulées du cycle suivant sont dans la troisième station de moulage.

Le procédé selon l'invention permet de réduire sensiblement chaque cycle :
- en diminuant la durée de refroidissement, grâce à l'injection d'un fluide de refroidissement de chaque côté de la pièce moulée, en particulier dans un espace de refroidissement confiné,
- en gardant les pièces moulées entre les parties de moule tout au long du procédé,
- dans certaines réalisations par un transfert par rotation.

A noter que l'éjection peut être réalisée pendant les moulages des différentes couches, de sorte qu'elle est réalisée en temps masquée, diminuant d'autant la durée du cycle de réalisation de la pièce moulée.

## Revendications

1. Procédé de moulage d'une pièce optique au moyen d'un dispositif de moulage comprenant un moule comprenant:
- deux parties de moule (F, M) se refermant l'une sur l'autre pour fermer le moule et s'écartant l'une en vis-à-vis de l'autre pour l'ouvrir,
- au moins une station de moulage (1, 3, 5) comprenant une cavité de moulage dont les parois (21F et 21M, 23F et 23M, 25F et 25M) sont formées par une portion de chacune des deux parties de moule,
- au moins une station de refroidissement (2, 4, 6) comprenant un espace de refroidissement (70) formé entre une portion de refroidissement (22F, 24F, 26F) de l'une des parties de moule (F) et une portion de refroidissement (22M, 24M, 26M) de l'autre des parties de moule (M),
ledit procédé comprenant un premier groupe d'étapes comprenant:
- une étape de moulage d'une pièce moulée (60) dans la cavité de moulage,
- une étape de transfert, au cours de laquelle la pièce moulée est transférée depuis cette cavité de moulage jusqu'à l'intérieur de l'espace de refroidissement (70), tout en conservant la pièce moulée (60) en vis-à-vis d'au moins l'une des parties de moule (F, M) au cours de cette étape de transfert,
- une étape de refroidissement, au cours de laquelle la pièce moulée (60) est maintenue à distance des portions de refroidissement (22F et 22M, 24F et 24M, 26F et 26M), l'étape de refroidissement comprenant l'envoi d'un fluide de refroidissement entre la pièce moulée (60) et les portions de refroidissement.

2. Procédé selon la revendication 1, **caractérisé en ce que** le moule comprend plusieurs stations de moulage (1, 3, 5) et plusieurs stations de refroidissement (2, 4, 6), le procédé étant mis en oeuvre de manière à réaliser la pièce optique en plusieurs couches successives (66, 67, 68) d'un ou plusieurs matériaux, chacune des couches étant obtenue dans une station de moulage distincte, la première couche (66) étant formée par le premier groupe d'étapes, une ou plusieurs couches supplémentaires (67, 68) étant chacune obtenue par un groupe supplémentaire d'étapes distinct comprenant :
- une étape de transfert, au cours de laquelle la pièce moulée (60) est transférée depuis la station de refroidissement (2, 4) où elle a été refroidie jusqu'à l'intérieur de la cavité de moulage de la station de moulage suivante (3, 5), tout en conservant la pièce moulée en vis-à-vis d'au moins l'une des parties de moule (F, M) lors de ce transfert,
- une étape de moulage de la couche suivante (67, 68) sur la pièce moulée,
- une étape de transfert, au cours de laquelle la pièce moulée (60) est transférée depuis la station de moulage correspondante (3, 5) jusqu'à l'intérieur de l'espace de refroidissement (70) de la station de refroidissement suivante (4, 6), tout en conservant la pièce moulée en vis-à-vis d'au moins l'une des parties de moule lors de ce transfert,
- une étape de refroidissement, au cours de laquelle la pièce moulée (60) est maintenue à distance des portions de refroidissement (24F et 24M, 26F et 26M), l'étape de refroidissement comprenant l'envoi d'un fluide de refroidissement entre la pièce moulée et les portions de refroidissement.

3. Procédé selon l'une quelconque des revendications précédentes, **caractérisé en ce que** la ou les étapes de transfert sont réalisées moule ouvert et la ou les étapes de refroidissement sont réalisées moule fermé, la pièce moulée (60) étant transférée depuis la station de moulage (1, 3, 5) jusqu'à l'intérieur d'un logement de refroidissement dont les parois sont formées par les portions de refroidissement (22F et 22M, 24F et 24M, 26F et 26M) et délimitent l'espace de refroidissement (70), le fluide de refroidissement étant envoyé à l'intérieur du logement de refroidissement.

4. Procédé selon l'une quelconque des revendications précédentes, **caractérisé en ce que** les stations (1 à 6) sont réparties autour d'un axe de rotation (B), les étapes de transfert d'une station à une station suivante se faisant selon un mouvement de rotation autour de cet axe de rotation.

5. Procédé selon l'une quelconque des revendications précédentes, **caractérisé en ce qu'**il comprend une étape d'enlèvement de la pièce moulée (60) du moule après la réalisation de la seule ou de la dernière étape de refroidissement du procédé, cet enlèvement étant réalisée au niveau d'une station de refroidissement où a eu lieu cette seule ou cette dernière étape de refroidissement.

6. Procédé selon l'une quelconque des revendications précédentes, **caractérisé en ce que** l'unique ou la première couche (66) de la pièce moulée (60) est réalisée de manière à former la pièce moulée avec une portion optique (61) et au moins une excroissance de maintien (62), et **en ce que** :
- le maintien à distance de la pièce moulée au cours de la ou des étapes de refroidissement est réalisé par maintien de la ou d'au moins une excroissance de maintien ; et/ou
- le maintien de la pièce moulée au cours de la ou des étapes de transfert est réalisé par maintien de la ou d'au moins une excroissance de maintien.

7. Procédé selon l'une quelconque des revendications précédentes, **caractérisé en ce que** durant la mise en oeuvre du procédé selon l'invention, chaque portion de cavité de moulage (21F, 23F, 25F) portée par l'une des parties de moule (F) reste en vis-à-vis de la même portion de cavité de moulage (21M, 23M, 25M) portée par l'autre des parties de moule et chaque portion de refroidissement (22F, 24F, 26F) portée par l'une des parties de moule (F) reste en vis-à-vis de la même portion de cavité de refroidissement (22M, 24M, 26M) portée par l'une des parties de moule (M).

8. Procédé selon l'une quelconque des revendications précédentes, **caractérisé en ce que** le fluide de refroidissement est injecté dans l'espace de refroidissement (70), de chaque côté de la pièce moulée (60), sur la pièce moulée et selon une direction correspondant à un axe optique (A) de la pièce moulée.

9. Moule de pièce optique comprenant :
- deux parties de moule (F, M) se refermant l'une sur l'autre pour fermer le moule et s'écartant l'une en vis-à-vis de l'autre pour l'ouvrir,
- au moins une station de moulage (1, 3, 5) comprenant une cavité de moulage dont les parois (21F et 21M, 23F et 23M, 25F et 25M) sont formées par une portion de chacune des deux parties de moule, la station de moulage comprenant des éléments d'injection d'un matériau dans la cavité de moulage,
- au moins une station de refroidissement (2, 4, 6) comprenant un espace de refroidissement (70)formé entre une portion de refroidissement (22F, 24F, 26F) de l'une des parties de moule (F) et une portion de refroidissement (22M, 24M, 26M) de l'autre des parties de moule (M),
dans lequel la station de refroidissement (2, 4, 6) comprend des éléments de maintien (32F et 32M, 34F et 34M, et 36M) permettant le maintien de la pièce moulée (60) à distance des portions de refroidissement lorsque le moule est fermé, et comprend des éléments d'injection (72F, 74F, 76F) d'un fluide de refroidissement à l'intérieur du logement de refroidissement.

10. Moule selon la revendication 9, **caractérisé en ce qu'**il comprend plusieurs stations de moulage (1, 3, 5) et plusieurs stations de refroidissement (2, 4, 6).

11. Moule selon la revendication 10, **caractérisé en ce qu'**il comprend autant de stations de refroidissement (2, 4, 6) que de stations de moulage (1, 3, 5).

12. Moule selon la revendication 10 ou selon la revendication 11, **caractérisé en ce que** les stations de moulage (2, 4, 6) sont disposées en alternance avec les stations de refroidissement (1, 3, 5).

13. Moule selon l'une quelconque des revendications 9 à 12, **caractérisé en ce que** les stations (1 à 6) sont réparties autour d'un axe (A).

14. Moule selon l'une quelconque des revendications 9 à 13, **caractérisé en ce qu'**à la ou à chaque station de moulage (1, 3, 5) au moins l'une des parties de moule (F, M) comprend au moins une portion creuse latérale (31M, 41M, 31F, 33M, 43M, 33F, 35M, 45M, 35F) s'étendant depuis la cavité de moulage et communiquant avec celle-ci, de manière à permettre le moulage dans la première station de moulage (1) d'une pièce moulée (60) avec une portion optique (61) et au moins une excroissance (62) latérale formées respectivement dans la cavité de moulage et dans la ou les portions creuses latérales, et de manière à permettre le logement de cette ou de ces excroissances (62) dans la ou les portions creuses latérales de la ou des autres stations (2 à 6).

15. Moule selon l'une quelconque des revendications 9 à 14, **caractérisé en ce qu'**à la ou au moins à l'une des stations de refroidissement (2, 4, 6), chaque partie de moule (F, M) comprend un conduit de refroidissement primaire (73F, 73M) débouchant dans l'espace de refroidissement par un orifice de refroidissement (72F, 72M, 74F, 74M, 76F, 76M) formé dans la portion de refroidissement (22F, 22M, 24F, 24M, 26F, 26M) correspondante, chaque conduit de refroidissement primaire étant relié à un connecteur apte à être relié à un dispositif d'envoi d'un fluide de refroidissement.

16. Moule selon l'une quelconque des revendications 9 à 15, **caractérisé** :
- **en ce qu'**une première des parties de moule (F) est une partie de moule fixe en rotation et une deuxième des parties de moule (M) comprend une base (9M) et une structure rotative (8),
- **en ce que** la ou les portions de cavité de moulage (21M, 23M, 25M) et la ou les portions de refroidissement (22M, 24M, 25M) portées par cette deuxième partie de moule (M) sont fixées sur la base (9M),
- **en ce que** la structure rotative (8) est apte à s'écarter de la base (9M) et de la ou des portions de cavité de moulage (21M, 23M, 25M) et de la ou des portions de refroidissement (22M, 24M, 26M) fixées sur cette base en se déplaçant d'une position rétractée vers une position déployée, dans laquelle la structure rotative est apte à tourner par rapport à la base, et
- **en ce que** la structure rotative (8) comprend des moyens de maintien de la pièce moulée (60) sur cette structure rotative lorsque cette dernière s'écarte ou tourne par rapport à la base (9M).

17. Moule selon la revendication 16, **caractérisé en ce que** la structure rotative est une platine rotative (8) comprenant des logements d'insertion (50) traversant l'épaisseur de la platine rotative, ces logements d'insertion étant agencés de manière à entourer la ou les portions de cavité de moulage (21M, 23M, 25M) et la ou les portions de refroidissement (22M, 24M, 25M) portées par cette deuxième platine (M) dans ladite position rétractée et à être écartés de ceux-ci en position déployée.

18. Moule selon l'une quelconque des revendications 9 à 17, **caractérisé en ce que** l'un des logements de refroidissement, dit logement final, présente une ouverture d'extraction (27) sur le côté du moule lorsque ce dernier est fermé, la profondeur de l'espace de refroidissement et la largeur de l'ouverture d'extraction étant agencées de manière à pouvoir extraire la pièce moulée (60) sans ouvrir le moule.
